# EUROPEAN PATENT APPLICATION

(11) **EP 3 680 830 A1**
(43) Date of publication of application: **15.07.2020**
(21) Application number: 19213204.1
(22) Date of filing: 03.12.2019
(51) Int. Cl.: G06Q 10/00, B25J 9/16

(54) **WORK PLANNING DEVICE**

(30) Priority: 09.01.2019 JP 2019002134
(71) Applicant: Subaru Corporation, Tokyo 150-8554 (JP)
(72) Inventor: SATO, Yoichi, Tokyo, 150-8554 (JP); KIKUCHI, Marosuke, Tokyo, 150-8554 (JP); SHIBAO, Yasunori, Tokyo, 150-8554 (JP)
(74) Representative: Sajda, Wolf E.

(57) **Abstract**

A work planning device (10) includes a process receiver (21), a condition receiver (22), and an order determination unit (23). The process receiver (21) is configured to receive (i) input of a plurality of work processes at least including attachment and detachment of a work target, and (ii) input of an order condition that is a condition for a relative order of the work processes. The condition receiver (22) is configured to receive input of an attachment condition for each of the work processes. The attachment condition includes a condition for an attachment situation of each workpiece. The order determination unit (23) is configured to determine order of the work processes such that the order of the work processes satisfy the order condition and the attachment situation satisfies the attachment condition.

## Description

### CROSS-REFERENCE TO RELATED APPLICATION

The present application claims priority from Japanese Patent Application No. 2019-002 134 filed on January 9, 2019.

### BACKGROUND

### 1. Technical Field

The invention relates to a work planning device.

### 2. Related Art

With regard to creating of a work plan in a manufacturing factory, techniques for automation have been developed. For example, Japanese Unexamined Patent Application Publication JP 2004-139 472 A discloses a system that automatically creates plural plans and derives an evaluation value from evaluation items, such as a delivery delay occurrence rate and a device operation rate.

### SUMMARY

An aspect of the invention provides a work planning device including a process receiver, a condition receiver, and an order determination unit. The process receiver is configured to receive (i) input of a plurality of work processes at least including attachment and detachment of a workpiece, and (ii) input of an order condition that is a condition for a relative order of the work processes. The condition receiver is configured to receive input of an attachment condition for each of the work processes.

The attachment condition includes a condition for an attachment situation of each workpiece. The order determination unit is configured to determine order of the work processes such that the order of the work processes satisfy the order condition and the attachment situation satisfies the attachment condition.

### BRIEF DESCRIPTION OF THE DRAWINGS

The accompanying drawings are included to provide a further understanding of the invention and are incorporated in and constitute a part of this specification. The drawings illustrate example embodiments and, together with the specification, serve to explain the principles of the invention.
- FIG. 1: is a functional block diagram illustrating an outline of a work planning ^ device.
- FIG. 2: illustrates examples of workpieces.
- FIG. 3: illustrates an example of an order condition.
- FIG. 4: illustrates an example of a work plan.
- FIG. 5: illustrates another example of the work plan.

### DETAILED DESCRIPTION

In the following, some embodiments of the invention are described in detail with reference to the accompanying drawings. Note that the following description is directed to illustrative examples of the invention and not to be construed as limiting to the invention. Factors including, without limitation, numerical values, shapes, materials, components, positions of the components, and how the components are coupled to each other are illustrative only and not to be construed as limiting to the invention.

Further, elements in the following example embodiments which are not recited in a most-generic independent claim of the invention are optional and may be provided on an as-needed basis. The drawings are schematic and are not intended to be drawn to scale. Throughout the present specification and the drawings, elements having substantially the same function and configuration are denoted with the same numerals to avoid any redundant description.

The technique described in JP 2004-139 472 A can only create a rough plan, for example, which lot is given priority and which line workpieces are to be input to. For example, the technique described in JP 2004-139 472 A cannot create or modify a work plan by combining subdivided work processes, for example, which component among plural components is firstly to be attached. Therefore, an administrator manually created and modified the work plan.

It is desirable to provide a work planning device capable of reducing a burden related to work planning.

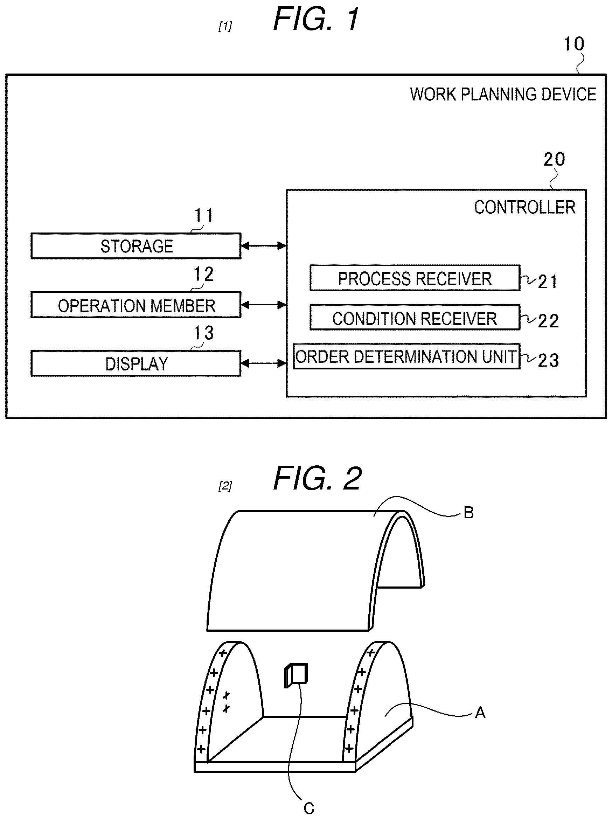

FIG. 1 is a functional block diagram illustrating an outline of a work planning device 10. The work planning device 10 is implemented by a computer such as a personal computer or a workstation. As illustrated in FIG. 1, the work planning device 10 includes a storage 11, an operation member 12, a display 13 and a controller 20.

The storage 11 is implemented by a RAM, a flash memory, or an HDD. The operation member 12 is implemented by, for example, a keyboard or a touch panel superimposed on the display 13. The operation member 12 receives an operation input from an administrator. The display 13 is implemented by a liquid crystal display or an electro luminescence (EL) display.

The controller 20 manages and controls the whole work planning device 10 using a semiconductor integrated circuit including a central processing unit (CPU), a ROM storing a program, and the RAM serving as a work area. In addition, the controller 20 also serves as a process receiver 21, a condition receiver 22, and an order determination unit 23.

The process receiver 21 receives information on plural work processes that the administrator inputs via the operation member 12. The plural work processes at least include attachment and detachment of a workpiece.

FIG. 2 illustrates examples of workpieces. In FIG. 2, for example, components A, B and C of an aircraft serve as the workpieces. The work processes include attachment and detachment of the components B and C to and from the component A, for example. As can be seen from FIG. 2, the component C is disposed in a space surrounded by the components A and B. Therefore, when the component B is attached to the component A, it is impossible to attach the component C to the component A and to execute any work for a combination of the component A and the component C.

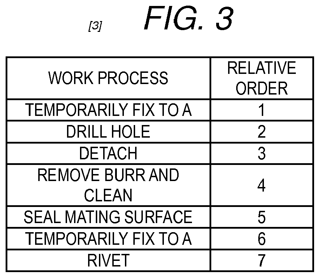

Further, the process receiver 21 receives input of an order condition that the administrator inputs via the operation member 12. The order condition will be described with reference to FIG. 3.

FIG. 3 illustrates an example of the order condition. The order condition is a condition of a relative order among the plural work processes. Here, the relative order is set for the work processes as illustrated in FIG. 3.

The work processes illustrated in FIG. 3 are common to work for a combination of the component A and the component B and work for a combination of the component A and the component C. That is, there are seven work processes illustrated in FIG. 3 for each of the components B and C, and therefore, there are 14 work processes in total. In addition, there are another work process of setting (that is, fixing and attaching) the component A on (to) a jig (not illustrated). Therefore, this embodiment has 15 work processes in total.

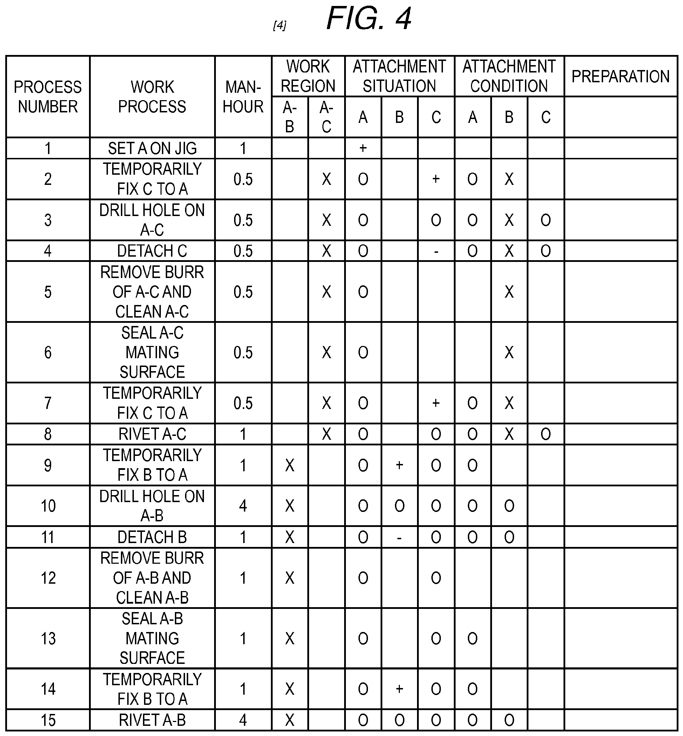

FIG. 4 illustrates an example of a work plan. As illustrated in FIG. 4, a process number, a man-hour, a work region, an attachment situation, an attachment condition, and preparation are associated with each work process. It is noted that nothing is set in the preparation column. The preparation will be described later.

The process number column stores positive numbers assigned to the respective processes in order of execution of the processes. The work process column stores information on an outline of each work process. The man-hour column stores, for example, a total man-hour (time) in each work process. The work region column stores a component(s) of interest in each work process.

The attachment situation column stores information indicating a situation of attachment of each of the components A, B, and C to a target. For example, when a sign "+" is filled in the attachment situation of the component A, it indicates that the component A is attached to a target of the component A (here, the jig).

When a sign "-" is filled in the attachment situation of the component B, it indicates that the component B is detached from a target of the component B (here, the component A).

When a sign "O" is filled in the attachment situation of the component C, it indicates that the component C has already been attached to a target of the component C (here, the component A).

The attachment condition column stores information on an attachment situation that is a prerequisite for execution of the work process. For example, when the sign "O" is filled in the attachment condition for the component A, the attachment condition includes a condition that the component A is attached to the target of the component A in advance.

When a sign "×" is filled in the attachment condition for the component B, the attachment condition includes a condition that the component B is not attached to the target of the component B (which means the component B has not yet been attached or has been detached in advance after being attached).

Among the above attachment situations, the signs "+" and "-" are information to be set for the work processes. That is, depending on the work process, information as to whether one of the components A, B, and C is attached to or detached from the target (hereinafter, referred to as "attachment/detachment information") is set. The process receiver 21 receives input of the attachment/detachment information that the administrator inputs via the operation member 12.

Meanwhile, among the above attachment situations, the sign "O" is specified based on the attachment/detachment information set for a previous work process. The order determination unit 23, which will be described later, specifies the sign "O".

The condition receiver 22 receives input of the attachment condition for each work process that the administrator inputs via the operation member 12.

For example, it is assumed that the work plan illustrated in FIG. 4 is not created. It is further assumed that at this time, the process receiver 21 and the condition receiver 22 receive input of the information described above. The order determination unit 23 changes the order of the work processes such that the changed order of the work processes satisfies the order condition illustrated in FIG. 3. In this way, the order determination unit 23 creates plural temporary work plans.

For each work process of one temporary work plan, the order determination unit 23 specifies the sign "O" of the attachment situation, that is, whether the component A, B and C have already been attached to the targets, respectively, based on the attachment/detachment information (that is, the signs "+" and "-") of the previous work process.

Further, the order determination unit 23 determines, for each work process, whether the attachment situation satisfies the attachment condition. When there is a work process in which an attachment situation does not satisfy an attachment condition, the order determination unit 23 discards this temporary work plan. The order determination unit 23 also performs the same process on the remaining temporary work plans.

Among the temporary work plans, the order determination unit 23 determines a temporary work plan in which order of work processes satisfies the order condition and an attachment situation satisfies the attachment condition, as a work plan.

For example, because of the order condition, another work process(es) may be interposed between any two of the work processes of the process numbers 2 to 8, but it is not permitted to change the relative order of the work processes of the process numbers 2 to 8. Similarly, another work process(es) may be interposed between any two of the work processes of the process numbers 9 to 15, but it is not permitted to change the relative order of the work processes of the process numbers 9 to 15. Further, since the work processes of the process numbers 2 to 4, 7 to 11, and 13 to 15 have the sign "O" in the attachment condition for the component A, the process number 1 is always assigned to the work process of setting the component A on the jig.

When there are plural work plans in which the order of the work processes of each work plan satisfies the order condition and the attachment situation of each work plan satisfies the attachment condition, the order determination unit 23 may select any of the work plans or may cause the display 13 to display the plural work plans and select one of the work plans based on an input that the administrator makes via the operation member 12. In this way, the order determination unit 23 determines the order of the work processes such that the order of the work processes satisfies the order condition and the attachment situation satisfies the attachment condition.

The above described processing of the order determination unit 23 is a mere example. The order determination unit 23 may perform processing according to other logic if the order determination unit 23 determines the order of the work processes such that the order of the work processes satisfies the order condition and the attachment situation satisfies the attachment condition.

In addition, when there is a disturbance factor such as a delay in the work plan, the work plan is to be modified. Even in this case, the order determination unit 23 can determine appropriate order of the work processes by performing the above processing on unexecuted work processes.

As described above, the work planning device 10 receives the order condition and the attachment condition set for each work process and creates a work plan satisfying these conditions. Therefore, it is not necessary for the administrator to manually create and modify the work plan, and the burden related to the work planning can be reduced.

For example, unlike a line work, manufacturing of an aircraft involves a lot of work processes to be performed on the same components A, B and C, and the number of permutations of the work processes is large. Therefore, the burden related to the work planning is large. The work planning device 10 can significantly reduce the burden related to the work planning. It is needless to say that the target of the work planning to be performed by the work planning device 10 is not limited to the manufacturing of the aircraft.

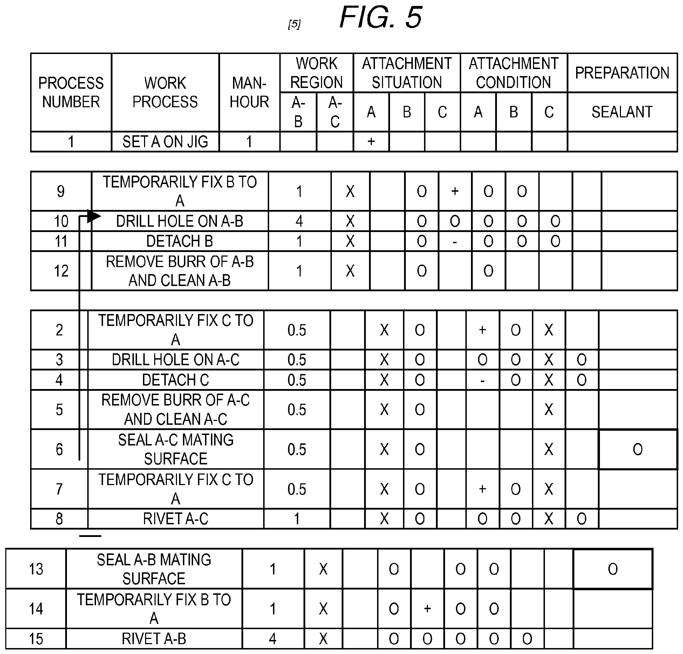

FIG. 5 is a diagram illustrating an example of the work plan. In the work plan illustrated in FIG. 5, a type "sealant" is set in the work processes of the process numbers 6 and 13 as the preparation.

The "preparation" is information indicating preparation for execution of a work process. The work processes of the process numbers 6 and 13 both include preparation of providing the sealant in a workplace. The number of types set in the preparation is not limited to one. Plural types may be set in the preparation. In this way, the type(s) of the preparation can be set in the work processes.

The condition receiver 22 also receives input of a type of the preparation that the administrator inputs via the operation member 12. The order determination unit 23 determines the order of the work processes such that the number of work processes provided between plural work processes for which the same type of preparation is set is smaller than that when no preparation is set. It is assumed that as a result, the work plan illustrated in FIG. 5 is created.

In FIG. 5, the work processes of the process numbers 9 to 12 are moved to positions between the process number 1 and the process number 2. The work processes are performed in order of the process numbers 1, 9 to 12, 2 to 8, and 13 to 15. Here, in order to facilitate understanding, the process numbers are not reassigned in FIG. 5. It is noted that the process numbers are reassigned in order from the top in FIG. 5. In FIG. 5, as compared with FIG. 4 in which no preparation is set, the number of work processes between a work process of sealing an A-C mating surface and a work process of sealing an A-B mating surface is small.

After the work process of sealing the A-C mating surface, the administrator leaves the sealant in the workplace. Thereafter, a preparation work of the sealant is unnecessary in the work process of sealing the A-B mating surface after the work processes of the process numbers 7 and 8. In this way, preparing and putting away of the sealant are reduced to one time. In this way, the number of the man-hours can be reduced using information on the preparation.

The embodiments of the invention have been described above with reference to the accompanying drawings. It is needless to say that the invention is not limited to such embodiments. It is apparent that those skilled in the art would conceive various changes and modifications within the scope of the appended claims, and it is to be understood that such changes and modification also fall within the technical scope of the invention.

In addition, a program that causes the computer to function as the work planning device 10, and a storage medium, such as a computer readable flexible disc, a magneto-optical disc, a ROM, a CD, a DVD, and a BD, that is recorded with the program and can be read by the computer are also provided. Here, the "program" refers to a data processing unit described in any language or with a description method.

According to the invention, the burden related to the work planning can be reduced.

### List of Reference Signs

- 10: work planning device
- 11: storage
- 12: operation member
- 13: display
- 20: controller
- 21: process receiver
- 22: condition receiver
- 23: order determination unit
- A: component
- B: component
- C: component

## Claims

1. A work planning device (10) comprising:
- a process receiver (21) configured to receive
(i) input of a plurality of work processes at least including attachment and detachment of a workpiece, and
(ii) input of an order condition that is a condition for a relative order of the work processes;
- a condition receiver (22) configured to receive input of an attachment condition for each of the work processes, the attachment condition including a condition for an attachment situation of each workpiece; and
- an order determination unit (23) configured to determine order of the work processes such that the order of the work processes satisfy the order condition and the attachment situation satisfies the attachment condition.

2. The work planning device (10) according to claim 1,
wherein a type of preparation for each work process can be set in each work process, and
wherein the order determination unit (23) is configured to determine the order of the work processes such that the number of work processes provided between work processes for which a preparation of a same type is set is smaller than that when no preparation is set.
